# EUROPÄISCHE PATENTSCHRIFT

(11) **EP 2 399 317 B1**
(45) Veröffentlichungstag und Bekanntmachung des Hinweises auf die Patenterteilung: **08.04.2015**
(21) Anmeldenummer: 10711357.3
(22) Anmeldetag: 15.02.2010
(51) Int. Cl.: H01M 8/18

(54) **METHODE ZUR SPEICHERUNG VON ELEKTRISCHER ENERGIE IN IONISCHEN FLÜSSIGKEITEN**
METHOD FOR STORING ELECTRICAL ENERGY IN IONIC LIQUIDS
PROCÉDÉ DE STOCKAGE D'ÉNERGIE ÉLECTRIQUE DANS DES LIQUIDES IONIQUES

(30) Priorität: 18.02.2009 DE 102009009357
(43) Veröffentlichungstag der Anmeldung: 28.12.2011
(73) Patentinhaber: Fraunhofer-Gesellschaft zur Förderung der angewandten Forschung e.V., 80686 München (DE)
(72) Erfinder: NOACK, Jens, 76327 Pfinztal (DE); TÜBKE, Jens, 76337 Waldbronn (DE); PINKWART, Karsten, 76327 Pfinztal (DE)
(74) Vertreter: Haggenmüller, Christian
(86) Internationale Anmeldenummer: PCT/EP2010/051872
(87) Internationale Veröffentlichungsnummer: WO 2010/094657

(56) Entgegenhaltungen:
- US-A- 4 786 567
- KATAYAMA Y ET AL: "Redox reaction in 1-ethyl-3-methylimidazolium-iron chlorides molten salt system for battery application" JOURNAL OF POWER SOURCES, ELSEVIER SA, CH LNKD- DOI:10.1016/S0378-7753(02)00077-0, Bd. 109, Nr. 2, 1. Juli 2002 (2002-07-01), Seiten 327-332, XP004361545 ISSN: 0378-7753

## Beschreibung

Elektrische Energie kann durch verschiedene Prozesse gespeichert werden. Eine Möglichkeit ist die Umwandlung von elektrischer Energie in chemische Energie durch chemische Reaktionen an Elektrodenoberflächen durch elektrischen Strom. Diese Art der Energiespeicherung wird in sekundären Batterien (Akkumulatoren) in großem Umfang technisch genutzt.

In Journal of Power Sources 109 (2002) wird auf den Seiten 327 bis 332 die Redox-Reaktion in geschmolzenen Salzsystemen aus 1-Ethyl-3-methylimidazolium-Eisenchloriden für Batterieanwendungen beschrieben.

Das Patent US 4,786,567 betrifft eine Vanadium Redox-Batterie sowie Verfahren zum Laden und Verfahren zur Energiegewinnung unter Verwendung der Vanadium Redox-Batterie.

Eine sekundäre Batterie ist eine elektrochemische Zelle, die aus zwei Halbzellen besteht, die wiederum durch einen ionenleitenden Separator getrennt sind. Der Separator sorgt für einen Ladungsausgleich, verhindert aber den Stoffübergang zwischen den Halbzellen. In der negativen Halbzelle findet während des Speichervorgangs eine Reduktion des aktiven Stoffes statt, in der positiven Halbzelle eine Oxidation. Im Speichervorgang fließen somit Elektronen von der positiven Halbzelle in die negative Halbzelle, im Entladevorgang in umgekehrter Richtung.

Um einen Ausgleich der Ladung und eine Bewegung der Ionen zu ermöglichen, ist in beiden Halbzellen als Ionenleiter ein flüssiger Stoff oder Stoffgemisch, als Elektrolyt bezeichnet, notwendig. Die Elektrode ist dabei die Phasengrenze zwischen elektrischem Leiter und ionischem Leiter. Das aktive Material kann die Elektrode selbst sein, ein im Elektrolyt gelöster Stoff oder in das Elektrodenmaterial eingelagerte Stoffe.

Besteht das aktive Material von negativem Elektrolyt (Anolyt) und positivem Elektrolyt (Katholyt) aus im Elektrolyt gelösten Stoffen, dann entsteht der Fall, dass sich bei diesem Typ von Batterie Energiemenge und Leistung unabhängig voneinander skalieren lassen, da der Elektrolyt aus Vorratsbehältern an den Elektroden vorbeigeführt werden kann. Dieser Typ von elektrochemischem Energiespeicher wird Redox-Flow-Batterie genannt.

Die allgemeinen chemischen Reaktionen sind folgende:

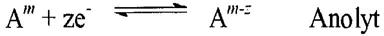

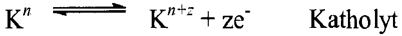

Der Elektrolyt von Redox-Flow-Batterien besteht typischerweise aus in Wasser gelösten Mineralsäuren oder organischen Säuren. Durch die Verwendung von Wasser als Bestandteil des Elektrolyts ist ein Potentialfenster von ca. -0,5 V bis 1,2 V mit Graphitelektroden gegenüber einer Standardwasserstoffelektrode möglich. Jenseits dieser als Potentialfenster bezeichneten Grenzen setzt eine Zersetzung von Wasser und damit die Zerstörung des wasserbasierten Elektrolyten, Gasentwicklung und Wirkungsgradverlust ein. Die Gesamtspannung einer wasserbasierten Redox-Flow-Batterie mit Graphitelektroden ist damit auf max. 1,7 V begrenzt.

Es existieren jedoch Kombinationen aus Redoxpaaren, bei der sich eine höhere Spannung als 1,7 V einstellt. Um diese Kombinationen von Redoxpaaren als elektrochemischen Energiespeicher nutzen zu können, müssen nichtwässrige Elektrolyte eingesetzt werden, so wie es mit organischen Säuren möglich ist oder neue Elektrodenmaterialien mit höherem Potentialfenster gefunden werden. Einhergehend mit der Erhöhung der Spannung ist durch P = U*I eine steigende Leistungsdichte und durch W=U*I*t eine steigende Energiedichte möglich.

Die Energiedichte von Redox-Flow-Batterien ist abhängig von der Löslichkeit der Redoxpaare. Für eine möglichst hohe Energiedichte befinden sich die Redoxpaare an der Grenze der Löslichkeit im Elektrolyt. Ein Typ von Redox-Flow-Batterie ist die Vanadium-Redox-Flow-Batterie. Die Reaktionsgleichung einer solchen Vanadium-Redox-Flow-Batterie lautet wie folgt:

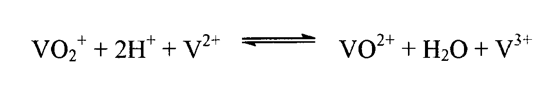

Bei diesem elektrochemischen Energiespeicher wird Vanadium in unterschiedlichen Oxidationsstufen im positiven (Katholyt) sowie im negativen (Anolyt) Elektrolyt verwendet. Bei Verwendung von wässriger Schwefelsäure als Lösungsmittel ist die Konzentration des Vanadium auf ca. 1,6 mol/L begrenzt. Der Grund hierfür liegt in der begrenzten Löslichkeit von Divanadyl-Kationen (VO₂⁺) in wässriger Schwefelsäure. Bei Temperaturen oberhalb von 40°C bildet sich nach der Gleichung in Abhängigkeit von der Zeit und dem Verhältnis an Vanadyl-/Divanadyl-Kationen (VO²⁺/VO₂⁺) aus gelösten Divanadyl-Kationen (VO₂⁺) festes Vanadiumpentoxid (V₂O₅) im Katholyt, das für die chemischen Reaktionen nicht mehr zur Verfügung steht, dadurch Leistung und Kapazität des Speichers verringert und einen Druckanstieg im Katholyten durch die filtrierende Wirkung des Graphitfilzes in der positiven Halbzelle bewirkt.

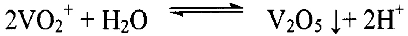

Divanadyl-Kationen (VO₂⁺) entstehen in einer Vanadium-Redox-Flow-Batterie während des Ladevorgangs nach folgender Reaktionsgleichung:

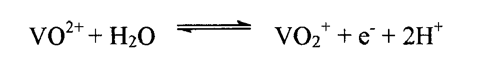

In wässrigen Systemen besitzt Kohlenstoff in seinen Modifikationen Diamant, Graphit sowie Glaskohlenstoff ein großes elektrochemisches Potentialfenster. Elektrodenmaterialen mit vergleichbarem Potentialfenster dürfen keine passivierenden Schichten oder Nebenreaktionen eingehen. Aus diesem Grund werden in Redox-Flow-Batterien üblicherweise Graphitelektroden eingesetzt, um eine Zersetzung von Wasser zu verhindern. Andererseits werden organische Säuren wie z.B. Methansulfonsäure als Elektrolytbestandteil eingesetzt, um Redoxpaar-Kombinationen jenseits der Grenze von 1,7 V einsetzten zu können.

Das elektrochemische Potentialfenster, d.h. der Spannungsbereich zwischen Bildung von Sauerstoff und Wasserstoff, d.h. der Zersetzung (Elektrolyse) von Wasser in Bezug zur Standardwasserstoffelektrode ist vom Material der Elektrode abhängig. Metallische Elektroden weisen meist ein wesentlich niedrigeres Potentialfenster auf als kohlenstoffbasierte Elektroden aus Graphit oder bilden passivierende, d.h. leistungsmindernde Schichten. Da jedoch ein möglichst breites elektrochemisches Potentialfenster zu Verwendung der Redoxpaare benötigt wird, greift man, wie oben bereits erläutert, auf Kohlenstoff in seinen Modifikationen Diamant, Graphit sowie Glaskohlenstoff zurück. Reine Graphitelektroden besitzen gegenüber Metallen eine wesentlich geringere Festigkeit und elektrische Leitfähigkeit. Zur Erhöhung der Stabilität werden Kompositmaterialien aus Graphit/Polymergemischen genutzt. Die Verwendung von Polymeren führt aber wiederum zu einer Verringerung der elektrischen Leitfähigkeit und damit zu Leistungseinbußen durch Widerstandsverluste.

Generell hängt die Energiedichte einer Redox-Flow-Batterie unmittelbar von der Löslichkeit der Redoxpaare in dem Elektrolyten ab. Um die Löslichkeit zu erhöhen, werden Säuren oder Basen als Bestandteile des Elektrolyten in höheren Konzentrationen eingesetzt oder Stabilisierungsmittel zugegeben.

Wie oben bereits diskutiert, stellt die Ausfällung von Vanadiumpentoxid bei Vanadium-Redox-Flow-Batterien ein Problem dar. Um solche Ausfällungen von Vanadiumpentoxid zu verhindern, werden im Stand der Technik üblicherweise vier Maßnahmen angewendet.
1. Die Arbeitstemperatur des Batteriesystems wird zwischen 0°C < T < 40°C festgelegt. Bei T < 0°C beginnt der wässrige Elektrolyt in den festen Aggregatzustand überzugehen, wobei die Viskosität des Elektrolyts vom Arbeitsbereich mit sinkender Temperatur zunimmt. Ein Gefrieren des Elektrolyts bewirkt eine Zerstörung der Batterie. Bei Temperaturen über 40°C entstehen irreversible Ausfällungen von festem Vanadiumpentoxid. Eine Einschränkung der Temperatur in diesem Arbeitsbereich bedeutet eine Temperaturüberwachung und -regelung der Anlage. Einerseits muss durch z.B. Heizung gewährleistet werden, dass der Elektrolyt nicht einfriert und damit die Anlage zerstört wird und andererseits darf die Temperatur im Reaktionsraum nicht über 40°C ansteigen. Dies muss gegebenenfalls durch Kühlung gewährleistet werden.
2. Die Ausfällung von festem Vanadiumpentoxid ist von dem Verhältnis an Vanadyl-/Divanadyl-Kationen abhängig. Je höher die Konzentration an Divanadyl-Kationen ist, die beim Ladevorgang zunimmt, desto höher ist die Wahrscheinlichkeit des Ausfallens von festem Vanadiumpentoxid auch innerhalb der Temperaturgrenzen von 0°C < T < 40°C. Aus diesem Grund wird bei einer Vanadiumkonzentration > 1,6 mol/L im Ladevorgang nur bis zu ca. 80% der Vanadyl-Kationen zu Divanadyl-Kationen umgesetzt, entsprechend einem Ladungszustand von 80%.
3. Die standardmäßige Konzentration des Vanadiumelektrolyts ist 1,6 mol/L in 3 M Schwefelsäure (H₂SO₄). Dies bildet einen Kompromiss zwischen erhöhter Viskosität bei höheren Schwefelsäurekonzentrationen (erhöhter Energieaufwand für Pumpen, damit Wirkungsgradverlust) und Energiedichte. In den Temperaturgrenzen wird das Ausfallen von Vanadiumpentoxid durch ca. 0,05 mol/L Phosphorsäure verhindert.
4. Durch eine Erhöhung der Konzentration an Schwefelsäure im Elektrolyt ist eine geringfügig höhere Löslichkeit an Vanadyl-/Divanadyl-Kationen möglich. Die Grenzen hierbei liegen bei ca. 2 M Vanadium in 4-5 M Schwefelsäure.

Die oben geschilderten Maßnahmen führen daher zu Beeinträchtigungen beim Betrieb einer Vanadium-Redox-Flow-Batterie.

In diesem Zusammenhang ist auch zu berücksichtigen, dass gemäß der *VAN'T HOFFSCHEN REGEL* (RGT-Regel) bei einer Erhöhung der Temperatur um 10K die Reaktionsgeschwindigkeit von chemischen Reaktionen um etwa das Doppelte ansteigt. Eine Erhöhung der Reaktionsgeschwindigkeit ist mit einer Erhöhung der Leistungsdichte verbunden. Bei Redox-Flow-Batterien arbeitet man soweit möglich bei Temperaturen oberhalb der Raumtemperatur. Bei der Vanadium-Redox-Flow-Batterie ist man durch die Ausfällung von Vanadiumpentoxid auf eine Temperatur von maximal 40°C beschränkt.

Generell ist die Arbeitstemperatur auf weit unterhalb der Siedetemperatur des Elektrolyten begrenzt, da durch den rasch ansteigenden Partialdruck des Elektrolyten ein Druckaufbau im gesamten System einsetzt, was zu Leckagen führen kann und der Elektrolyt nicht mehr an der Reaktion teilhaben kann. Daher können die derzeit üblichen Redox-Flow-Batterien nur in einem recht begrenzten Temperaturbereich betrieben werden.

Eine Aufgabe der vorliegenden Erfindung besteht in der Bereitstellung einer Redox-Flow-Batterie, bei der die oben beschriebenen Nachteile möglichst vermieden werden und eine verbesserte Variabilität bei der Auswahl der Betriebsparameter wie z.B. Betriebstemperatur oder Wahl des Elektrodenmaterials ermöglicht wird.

Gelöst wird diese Aufgabe gemäß der vorliegenden Erfindung durch die Bereitstellung einer Redox-Flow-Batterie, die einen Elektrolyten umfasst, der zumindest eine ionische Flüssigkeit enthält, wobei das Anion der ionischen Flüssigkeit(en) aus Halogenid, Phosphat, Nitrit, Nitrat, Sulfat, Hydrogensulfat, Carbonat, Hydrogencarbonat, Phosphonat, Phosphinat, Sulfonat, Carboxylat, Imid, Methid, oder deren Gemischen ausgewählt wird, und der Elektrolyt zu mindestens 90 Gew% aus der/den ionischen Flüssigkeit/en besteht.

Im Rahmen der vorliegenden Erfindung wird der Begriff "Redox-Flow-Batterie" in seiner üblichen Bedeutung verwendet. Der prinzipielle Aufbau einer Redox-Flow-Batterie ist dem Fachmann bekannt.

Die Redox-Flow-Batterie speichert elektrische Energie in chemischen Verbindungen und ist daher mit den Akkumulatoren verwandt. Im Unterschied zu klassischen Akkumulatoren zirkulieren die zwei energiespeichernden Elektrolyte in zwei getrennten Kreisläufen, zwischen denen in der Batterie mittels einer Membran bzw. eines Separators ein Ladungsaustausch möglich wird. Die Elektrolyte werden außerhalb der Batterie in getrennten Behältern bzw. Tanks gelagert, wodurch die gespeicherte Energie nicht mehr von der Größe der Zelle abhängt, somit Energie und Leistung separat skaliert werden können.

In Übereinstimmung mit einer herkömmlichen Redox-Flow-Batterie weist die erfindungsgemäße Redox-Flow-Batterie daher eine positive Halbzelle, eine negative Halbzelle, einen die beiden Halbzellen trennenden Separator, zwei Elektroden, sowie zwei außerhalb der Zellen befindliche Elektrolytbehälter auf.

Wie bereits oben diskutiert, sorgt der Separator für einen Ladungsausgleich, verhindert aber den Stoffübergang zwischen den Halbzellen. In der negativen Halbzelle findet während des Speichervorgangs eine Reduktion des aktiven Stoffes statt, in der positiven Halbzelle eine Oxidation. Im Speichervorgang fließen somit Elektronen von der positiven Halbzelle in die negative Halbzelle, im Entladevorgang in umgekehrter Richtung.

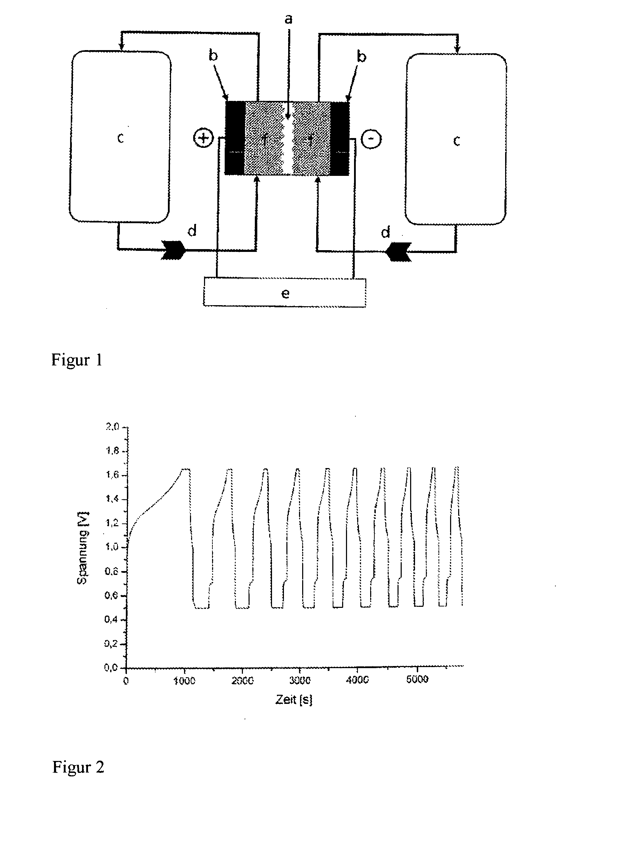

Beispielhaft zeigt Figur 1 den prinzipiellen Aufbau einer Redox-Flow-Batterie mit (a) einem Ionen leitenden Separator, (b) Elektroden, (c) Elektrolytbehältern, (d) Elektrolytpumpen, (e) elektrischer Quelle/Senke und (f) positiver bzw. negativer Halbzelle.

Im Rahmen der vorliegenden Erfindung wird der Begriff "ionische Flüssigkeit" in seiner üblichen Bedeutung verwendet, d.h. unter ionischen Flüssigkeiten werden organische, ionische Verbindungen verstanden, die sich aus einem organischen oder anorganischen Anion und einem voluminösen organischen Kationen zusammensetzen. Liegt die Ionische Flüssigkeit unter 100 °C schmelzflüssig vor, spricht man von RTILs (Room Temperature Ionic Liquids).

Typische Eigenschaften ionischer Flüssigkeiten sind
- hohe chemische Stabilität,
- weites Potentialfenster (hohe elektrochemische Stabilität),
- hohe ionische Leitfähigkeit,
- geringer Dampfdruck,
- nicht brennbar,
- hohe thermische Stabilität.

Die große Variationsbreite der organischen Substituenten und die Vielzahl an Kombinationsmöglichkeiten von Anionen und Kationen erlauben es, die physikalisch-chemischen Eigenschaften ionischer Flüssigkeiten in einem weiten Bereich zu beeinflussen bzw. gezielt an Anwendungen anzupassen.

Bevorzugt enthalten beide (d.h. die positive und negative) Halbzellen der Redox-Flow-Batterie eine ionische Flüssigkeit, wobei die ionischen Flüssigkeiten gleich oder verschieden sein können.

In einer bevorzugten Ausführungsform enthält der Elektrolyt weniger als 0,05 Gew.-% Wasser, bevorzugter weniger als 0,02 Gew.-%, noch bevorzugter weniger als 0,01 Gew.-% Wasser.

Bevorzugt ist der Elektrolyt wasserfrei.

Durch die Verwendung von wasserfreien Elektrolyten ist ein größeres elektrochemisches Potentialfenster als bei wasserbasierten Redox-Flow-Batterien realisierbar. Mit Erhöhung der Spannung erhöhen sich die Leistung und die Energiedichte des Systems.

Erfindungsgemäß besteht der Elektrolyt der Redox-Flow-Batterie zu mindestens 90 Gew.-%, bevorzugt zu mindestens 100 Gew.-% aus der/den ionischen Flüssigkeit/en.

Erfindungsgemäß wird das Anion der ionischen Flüssigkeit(en) aus Halogenid, Phosphat wie z.B. Hexafluorophosphat, Nitrit, Nitrat, Sulfat wie z.B. Alkylsulfat, Hydrogensulfat, Carbonat, Hydrogencarbonat, Phosphonat, Phosphinat, Sulfonat wie z.B. Tosylat oder Methansulfonat, Carboxylat wie z.B. Formiat, Imid wie z.B. bis(Trifluormethylsulfonyl)imid, Methid, oder deren Gemischen ausgewählt.

Als bevorzugte Anionen können beispielhaft genannt werden: Fluorid, Hexafluorophosphat, Nitrit, Nitrat, Sulfat, Hydrogensulfat, Carbonat, Hydrogencarbonat, Phosphat, Hydrogenphosphat, Dihydrogenphosphat, Vinylphosphonat, Dicyanamid, Bis(pentafluoroethyl)phosphinat, Tris(pentafluoroethyl)trifluorophosphat, Tris(heptafluoropropyl)trifluorophosphat, organisches Sulfonat der allgemeinen Formel [Rₑ-SO₃]⁻, wobei Rₑ für einen Kohlenstoff enthaltenden organischen, gesättigten oder ungesättigten, acyclischen oder cyclischen, aliphatischen, aromatischen oder araliphatischen Rest mit 1 bis 30 Kohlenstoffatomen, welcher ein oder mehrere Heteroatome enthalten und/oder durch eine oder mehrere funktionelle Gruppen oder Halogen substituiert sein kann, steht,

Carboxylat der allgemeinen Formel [R_{f}-COO]⁻, wobei R_{f} für Wasserstoff oder einen Kohlenstoff enthaltenden organischen, gesättigten oder ungesättigten, acyclischen oder cyclischen, aliphatischen, aromatischen oder araliphatischen Rest mit 1 bis 30 Kohlenstoffatomen, welcher ein oder mehrere Heteroatome enthalten und/oder durch eine oder mehrere funktionelle Gruppen oder Halogen substituiert sein kann, steht,
(Fluoralkyl)fluorphosphat,

Imid der allgemeinen Formeln [R_{g}-SO₂-N-SO₂-Rₕ]⁻, [Rⱼ-SO₂-N-CO-Rⱼ]⁻ oder [Rₖ-CO-N-CO-Rₗ]⁻, wobei R_{g} bis Rₗ unabhängig voneinander für Wasserstoff oder einen Kohlenstoff enthaltenden organischen, gesättigten oder ungesättigten, acyclischen oder cyclischen, aliphatischen, aromatischen oder araliphatischen Rest mit 1 bis 30 Kohlenstoffatomen, welcher ein oder mehrere Heteroatome enthalten und/oder durch eine oder mehrere funktionelle Gruppen oder Halogen substituiert sein kann, stehen;

### Methid der allgemeinen Formel

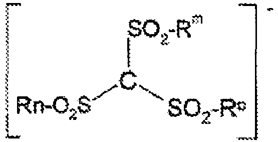

wobei Rₘ bis Rₒ unabhängig voneinander für Wasserstoff oder einen Kohlenstoff enthaltenden organischen, gesättigten oder ungesättigten, acyclischen oder cyclischen, aliphatischen, aromatischen oder araliphatischen Rest mit 1 bis 30 Kohlenstoffatomen, welcher ein oder mehrere Heteroatome enthalten und/oder durch eine oder mehrere funktionelle Gruppen oder Halogen substituiert sein kann, stehen ;
organisches Sulfat der allgemeinen Formel [R_{P}O-SO₃]⁻, wobei R_{P} für einen Kohlenstoff enthaltenden organischen, gesättigten oder ungesättigten, acyclischen oder cyclischen, aliphatischen, aromatischen oder araliphatischen Rest mit 1 bis 30 Kohlenstoffatomen, welcher ein oder mehrere Heteroatome enthalten und/oder durch eine oder mehrere funktionelle Gruppen oder Halogen substituiert sein kann, steht.

Bevorzugt wird das Kation der ionischen Flüssigkeit(en) aus Imidazolium, Pyridinium, Pyrazolium, Chinolinium, Thiazolium, Triazinium, Pyrrolidinium, Phosphonium, Ammonium, Sulfonium, oder deren Gemischen ausgewählt.

Als bevorzugte Kationen der ionischen Flüssigkeit können beispielhaft genannt werden:
Quartäre Ammonium-Kationen der allgemeinen Formel [NR₁R₂R₃R₄]⁺, wobei R₁, R₂, R₃, R₄, die gleich oder unterschiedlich sein können, C₁₋₁₂-Alkyl oder Phenyl-C₁₋₄-Alkyl bedeuten, und/oder R1 und R2 zusammen für einen substituierten oder unsubstituierten C₄₋₅-Alkenylenrest stehen;
quartäre Phosphonium-Kationen der allgemeinen Formel [PR₁R₂R₃R₄]⁺, wobei R₁, R₂, R₃, R₄, die gleich oder unterschiedlich sein können, C₁₋₁₂-Alkyl oder Phenyl-C₁₋₄-Alkyl bedeuten, und/oder R1 und R2 zusammen für einen substituierten oder unsubstituierten C₄₋₅-Alkenylenrest stehen;

Imidazolium-Kationen der allgemeinen Formel

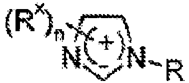

Pyridinium-Kationen der allgemeinen Formel

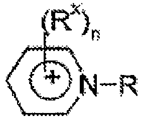

Pyrazolium-Kationen der allgemeinen Formel

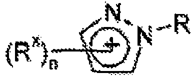

Chinolinium-Kationen der allgemeinen Formel

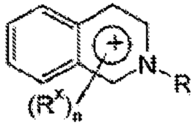

Thiazolium-Kationen der allgemeinen Formel

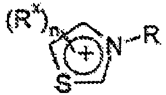

Triazinium-Kationen der allgemeinen Formel 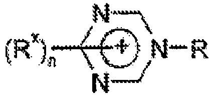 wobei n, R und R^{x} die folgende Bedeutung haben:
n ist 0, 1, 2, 3 oder 4;
R ist Wasserstoff, C₁₋₁₂-Alkyl oder Phenyl-C₁₋₄-alkyl;
R^{x} ist C₁₋₆-Alkyl, Halogen, Amino, Cyan, C₁₋₄-Alkoxy, Carboxylat oder Sulfonat.

Ionische Flüssigkeiten bieten die Möglichkeit, Redox-Paare zu lösen und als Elektrolyt in Redox-Flow-Batterien zu nutzen.

Bevorzugt wird für die positive Halbzelle das Redox-Paar aus V⁴⁺/V⁵⁺, F₂/F⁻, O₂/O²⁻, O₃/O₂, Ag²⁺/Ag⁺, Co³⁺/Co²⁺, N₂O/N₂, Ce⁴⁺/Ce³⁺, Au⁺/Au, Mn⁷⁺/Mn⁴⁺ Ni⁴⁺/Ni²⁺, Mn³⁺/Mn²⁺, Pb⁴⁺/Pb²⁺, Au³⁺/Au⁺, Cl₂/Cl⁻, Tl³⁺/Tl²⁺, Mn⁴⁺/Mn²⁺, Cu²⁺/Cu⁺, Pu⁵⁺/Pu⁴⁺, Br₂/Br⁻, I⁵⁺/I⁻, Fe³⁺/Fe²⁺, Pu⁴⁺/Pu³⁺, Hg²⁺/Hg₂²⁺, Hg²⁺/Hg, U⁵⁺/U⁴⁺, Ag²⁺/Ag⁺, V⁴⁺/V³⁺, Ru³⁺/Ru²⁺, Sn⁴⁺/Sn²⁺ Cl₂/Cl⁻, I₂/I⁻ ausgewählt.

Bevorzugt wird für die negative Halbzelle das Redox-Paar aus V³⁺/V²⁺, Np⁴⁺/Np³⁺, Sn⁴⁺/Sn²⁺, Sr²⁺/Sr, Ba²⁺/Ba, Ce³⁺/Ce, Zn²+/Zn, As⁵⁺/As³⁺, U⁴⁺/U³⁺, Sb⁵⁺/Sb³⁺, S⁴⁺/S²⁺, Ti⁴⁺/Ti²⁺, In³⁺/In²⁺, Ni⁴⁺/Ni²⁺, S/S²⁻, Cr³⁺/Cr²⁺, In²⁺/In⁺, Ti³⁺/Ti²⁺, Eu³⁺/Eu²⁺, Pb²⁺/Pb, Tl⁺/Tl, Ti⁴⁺/Ti³⁺, Na⁺/Na, Li⁺/Li, K⁺/K, Mg⁺/Mg, Mg²⁺/Mg, Ca⁺/Ca, Ca²⁺/Ca, Sr⁺/Sr, Be²⁺/Be ausgewählt.

In einer bevorzugten Ausführungsform handelt es sich bei der Redox-Flow-Batterie um eine Vanadium-Redox-Flow-Batterie, d.h. für die positive Halbzelle wird V⁴⁺/V⁵⁺ als Redox-Paar und für die negative Halbzelle V³⁺/V²⁺ als Redox-Paar verwendet.

In weiteren bevorzugten Ausführungsformen lassen sich beispielhaft folgende Redox-Flow-Batterien nennen:
- Eisen-Chrom-Redox-Flow-Batterie
   Positive Halbzelle: Fe²⁺/Fe³⁺; negative Halbzelle: Cr²⁺/Cr³⁺
- Cer-Vanadium-Redox-Flow-Batterie
   Positive Halbzelle: Ce³⁺/Ce⁴⁺; negative Halbzelle: V²⁺N³⁺
- Eisen-Titan-Redox-Flow-Batterie
   Positive Halbzelle: Fe²⁺/Fe³⁺; negative Halbzelle: Ti³⁺/Ti⁴⁺
- Polysulfid-Bromid-Redox-Flow-Batterie
   Positive Halbzelle: Br₂/Br⁻; negative Halbzelle: S₄²⁻/S₂²⁻
- Vanadium-Bromid-Redox-Flow-Batterie
   Positive Halbzelle: Br₂/Br⁻; negative Halbzelle: V²⁺/V³⁺
- Zink-Brom-Redox-Flow-Batterie
   Positive Halbzelle: Zn/Zn²⁺ ; negative Halbzelle: Br₂/Br⁻

In einer bevorzugten Ausführungsform weist die Vanadium-Redox-Flow-Batterie eine Betriebstemperatur im Bereich von -30 °C bis 400 °C, bevorzugter im Bereich von -20 °C bis 200 °C auf. In einer bevorzugten Ausführungsform liegt die Betriebstemperatur der Vanadium-Redox-Flow-Batterie oberhalb von 40°C, noch bevorzugter oberhalb von 50°C.

Bevorzugt liegt in der Vanadium-Redox-Flow-Batterie die Konzentration der Vanadium-Ionen im Elektrolyten im Bereich von 0,1 mol/L bis 10 mol/L, noch bevorzugter im Bereich von 0,1 mol/L bis 5 mol/L. In einer bevorzugten Ausführungsform liegt die Konzentration der Vanadium-Ionen im Elektrolyten oberhalb von 2 mol/L, noch bevorzugter oberhalb von 3 mol/L.

Wie bereits oben diskutiert, kommt es bei der herkömmlichen Vanadium-Redox-Flow-Batterie zur Bildung von festem Vanadiumpentoxid bei Temperaturen über 40°C und Konzentrationen an Vanadium über 1,6 mol/L. Durch den Einsatz von ionischen Flüssigkeiten, bevorzugt wasserfreien ionischen Flüssigkeiten, findet die Bildung von festem Vanadiumpentoxid nicht statt. Damit können höhere Konzentrationen an Vanadium im Elektrolyt erreicht werden. Dies führt zu höheren Energiedichten bei einer Vanadium-Redox-Flow-Batterie. Weiterhin kann der Arbeitsbereich der Batterie über 40°C ausgedehnt werden, was zu einer höheren Leistungsdichte führt.

Ionische Flüssigkeiten besitzen andere Schmelz- und Siedepunkte als Wasser und in Wasser gelöste Säuren und Basen. Damit ergeben sich andere Arbeitsbereiche, die mit wässrigen Elektrolyten nicht erreicht werden können. So können Betriebstemperaturen weit über dem Siedepunkt von Wasser (100°C), damit einhergehend höhere Leistungsdichten erzielt werden. Eventuelle Kühlungs- und Überwachungsvorrichtungen können entfallen. Ebenso können mit ionischen Flüssigkeiten Betriebstemperaturen unterhalb des Gefrierpunktes von Wasser (0°C) erreicht werden. Damit kann eine eventuelle Heizung der Anlage entfallen.

In einer bevorzugten Ausführungsform wird in zumindest einer Halbzelle, bevorzugter in beiden Halbzellen der Redox-Flow-Batterie das Redox-Paar von der ionischen Flüssigkeit gebildet.

Ionische Flüssigkeiten können selbst die Redox-Paare bilden. Dadurch ist es nicht mehr notwendig, Stoffe als Redox-Paare bis an die Grenze ihrer Löslichkeit in einer Flüssigkeit zu lösen, sondern das Lösungsmittel selbst als Elektrolyt und Redox-Paar zu nutzen.

Das bietet den Vorteil, dass die Energiedichte des Systems nicht mehr von der Löslichkeit der Redox-Paare im Elektrolyt und der Spannung abhängt, sondern von der molaren Masse der ionischen Flüssigkeiten und der sich einstellenden Spannung. Damit können wesentlich höhere Energiedichten erzielt werden als in jetzigen Systemen mit wässrigen Elektrolyten.

In einer bevorzugten Ausführungsform weist die erfindungsgemäße Redox-Flow-Batterie metallische Elektroden auf. Bevorzugt wird das Metall aus Eisen, Eisenlegierungen, Kupfer, Kupferlegierungen, Nickel, Nickellegierungen, Zink, Zinklegierungen, Silber, Silberlegierungen, Aluminium, Aluminiumlegierungen ausgewählt.

Durch die Verwendung von ionischen Flüssigkeiten mit sehr geringem Wassergehalt oder wasserfreien ionischen Flüssigkeiten kann die Zersetzung von Wasser vollständig oder zumindest weitgehend vermieden werden. Das Potentialfenster befindet sich innerhalb der Zersetzung der ionischen Flüssigkeiten. Damit lassen sich im Gegensatz zu wässrigen Elektrolyten metallische Elektroden verwenden.

Alternativ besteht die Elektrode in einer weiteren bevorzugten Ausführungsform aus Diamant oder Indium-Zinn-Oxid (ITO). Diese Elektrodenmaterialien sind chemisch inert gegenüber einer Vielzahl von Stoffen, mechanisch stabil.

Die Elektroden werden entweder mittels bekannter Beschichtungsverfahren (z.B. CVD, PVD) auf ein geeignetes Substrat aufgebracht oder gesondert hergestellt und mit dem Substrat verpresst. Die letztgenannte Variante wird dann eingesetzt, wenn für das gewünschte Substrat keine Beschichtungsverfahren zur Verfügung stehen.

Elektroden aus Diamant sind zur Einstellung der gewünschten elektrischen Leitfähigkeit bevorzugt mit Bor, Stickstoff und/oder Phosphor dotiert. Durch die Wahl des Dotierungsmittels und den Dotierungsgrad kann die elektrische Leitfähigkeit angepasst werden.

In einer bevorzugten Ausführungsform weist der Elektrolyt der erfindungsgemäßen Redox-Flow-Batterie keinen Zusatz von Stabilisierungsmitteln und/oder Säuren bzw. Basen auf.

Redox-Paare weisen in ionischen Flüssigkeiten andere Löslichkeiten auf als in wässrigen Systemen. Zudem unterscheiden sich die Löslichkeiten auch sehr stark von den ionischen Flüssigkeiten untereinander. Redox-Paare können in ionischen Flüssigkeiten eine höhere Löslichkeit aufweisen, als dies in wässrigen Systemen möglich wäre. Stabilisierungsmittel oder der Zusatz von Säuren oder Basen können entfallen.

Bevorzugt wird der Separator zwischen den beiden Halbzellen ausgewählt aus NAFION; Fumasep FAP, FAD, FAB, FKE, FKS, FKB, FTCM-A, FTCM-E, FKL, FAA, FTAM-E, FTAM-A, FAS, FBM; mikroporöse Separatoren.

Gemäß eines weiteren Aspekts betrifft die vorliegende Erfindung die Verwendung eines Elektrolyts, der eine ionischen Flüssigkeit enthält, in einer Redox-Flow-Batterie, wobei das Anion der ionischen Flüssigkeit(en) aus Halogenid, Phosphat, Nitrit, Nitrat, Sulfat, Hydrogensulfat, Carbonat, Hydrogencarbonat, Phosphonat, Phosphinat, Sulfonat, Carboxylat, Imid, Methid, oder deren Gemischen ausgewählt wird; und der Elektrolyt zu mindestens 90 Gew% aus der/den ionischen Flüssigkeit/en besteht.

Bezüglich der bevorzugten Eigenschaften der ionischen Flüssigkeit, des Elektrolyts und der Redox-Flow-Batterie kann auf die obigen Ausführungen verwiesen werden.

Durch die nachfolgend beschriebenen Beispiele wird die vorliegende Erfindung eingehender erläutert.

### Beispiele

In dem nachfolgend beschriebenen Beispiel wurde 2-Hydroxyethylformiat als ionische Flüssigkeit und Lösungsmittel für anorganische Salze in einer Redox-Flow-Batterie verwendet.

Je 0,5 mol Vanadium(III)-chlorid (VCl₃) wurden in 2 x 50 ml 2-Hydroxyethylammoniumformiat gelöst. In den beiden Lösungen wurde das dreiwertige Vanadium mittels einer Durchflusszelle an Kohlenstoffelektroden elektrolytisch zu V²⁺ und V⁴⁺ reduziert bzw. oxidiert. Eine weitere Lösung von 0,5 mol VCl₃ in 50 ml 2-Hydroxyethylammoniumformiat diente mit der elektrolytisch hergestellten V⁴⁺-Lösung als Ausgangselektrolyt für die Versuche zu Energiespeicherung bzw. Energieentnahme.

Die V³⁺-Lösung diente als Anolyt und wurde mittels einer Pumpe in die negative Halbzelle einer elektrochemischen Durchflusszelle gefüllt. Die V⁴⁺-Lösung diente als Katholyt und wurde in die positive Halbzelle der Durchflusszelle gefüllt. Die Lösungen wurden weiter nicht durch die Zelle im Kreislauf gepumpt. Mittels eines Batterietestsystems wurde die Zelle statisch mit einer max. Stromdichte von 5 mA/cm² in den Grenzen von 0,5V - 1,65V geladen und entladen. Dabei wurden nahezu 9000 Zyklen absolviert. In Figur 2 ist der Spannungsverlauf der ersten 10 Lade- und Entladezyklen aufgetragen.

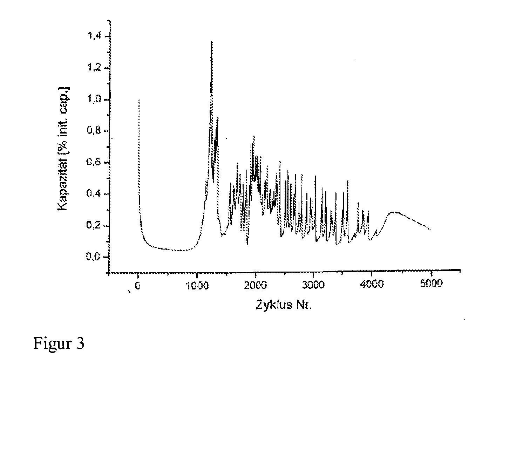

In Figur 3 ist der Verlauf der Entladekapazität, bezogen auf die erste Entladekapazität, der ersten 5000 Lade- und Entladezyklen dargestellt.

Figur 2 zeigt die ersten zehn Lade- und Entladekurven einer stationären Vanadium-Redox-Flow-Batterie mit 2-Hydroxyethylammoniumformiat als Lösungsmittel. Die Zelle wurde galvanostatisch mit einem konstanten Strom von 0,25 A bis zu einer Spannung von 1,65 V geladen. Danach erfolgte die Umschaltung zum potentiostatischem Laden bei einer Spannung von 1,65 V bis zu einer Stromstärke von 0,15 A. Anschließend erfolgte sofort der Entladevorgang. Bei einer Stromstärke von 0,25 A wurde die Batterie bis zu einer Spannung von 0,5 V galvanostatisch entladen. Danach erfolgte die potentiostatische Entladung bei einer Spannung von 0,5 V bis zum Erreichen einer unteren Stromgrenze von 0,15 A. Nach dem Entladevorgang erfolgte ein Schritt mit der Messung der Klemmspannung für 60 Sekunden ohne Belastung. In diesem Schritt steigt die Spannung der Batterie auf ca. 0,7 V. Diese Lade-/Entladezyklen wurden wie in Figur 3 dargestellt 5000 mal durchgeführt. Dabei ist in Figur 3 die aus den Strom-, Spannungs-, und Zeitmessungen berechnete Kapazität bezogen auf die erste Entladekapazität dargestellt. Die Entladekapazität des ersten Entladevorgangs in Amperestunden (Ah) wurde als 1 gesetzt und die Entladekapazität der folgenden Zyklen auf den ersten Wert bezogen. Während der ersten 1000 Zyklen ist ein starkes Abfallen der Kapazität zu erkennen, die sich jedoch nachfolgend kurzzeitig über den Ausgangswert erholt. Auch nach 5000 Zyklen ist noch eine Kapazität von ca. 20 % der Ausgangskapazität messbar.

## Patentansprüche

1. Redox-Flow-Batterie, umfassend einen Elektrolyten, der zumindest eine ionische Flüssigkeit enthält, wobei das Anion der ionischen Flüssigkeit(en) aus Halogenid, Phosphat, Nitrit, Nitrat, Sulfat, Hydrogensulfat, Carbonat, Hydrogencarbonat, Phosphonat, Phosphinat, Sulfonat, Carboxylat, Imid, Methid, oder deren Gemischen ausgewählt wird, und der Elektrolyt zu mindestens 90 Gew% aus der/den ionischen Flüssigkeit/en besteht.

2. Redox-Flow Batterie gemäß Anspruch 1, wobei beide Halbzellen der Redox-Flow-Batterie eine ionische Flüssigkeit enthalten und die ionischen Flüssigkeiten gleich oder verschieden sein können.

3. Redox-Flow-Batterie gemäß einem der vorstehenden Ansprüche, wobei der Elektrolyt weniger als 0,02 Gew.-% Wasser enthält, bevorzugt wasserfrei ist.

4. Redox-Flow-Batterie gemäß einem der vorstehenden Ansprüche, wobei das Kation der ionischen Flüssigkeit(en) aus Imidazolium, Pyridinium, Pyrazolium, Chinolinium, Thiazolium, Triazinium, Pyrrolidinium, Phosphonium, Ammonium, Sulfonium, oder deren Gemischen ausgewählt wird.

5. Redox-Flow-Batterie gemäß einem der vorstehenden Ansprüche, wobei für die positive Halbzelle das Redox-Paar aus V⁴⁺/V⁵⁺, F₂/F⁻, O₂/O²⁻, O₃/O₂, Ag²⁺/Ag⁺, Co³⁺/Co²⁺, N₂O/N₂, Ce⁴⁺/Ce³⁺, Au⁺/Au, Mn⁷⁺/Mn⁴⁺, Ni⁴⁺/Ni²⁺, Mn³⁺/Mn²⁺, Pb⁴⁺/Pb²⁺, Au³⁺/Au⁺, Cl₂/Cl⁻, Tl³⁺/Tl²⁺, Mn⁴⁺/Mn²⁺, Cu²⁺/Cu⁺, Pu⁵⁺/Pu⁴⁺, Br₂/Br⁻, I⁵⁺/I⁻, Fe³⁺/Fe²⁺, Pu⁴⁺/Pu³⁺, Hg²⁺/Hg₂²⁺, Hg²⁺/Hg, U⁵⁺/U⁴⁺, Ag²⁺/Ag⁺, V⁴⁺/V³⁺, Ru³⁺/Ru²⁺, Sn⁴⁺/Sn²⁺, Cl₂/Cl⁻ oder I₂/I⁻ ausgewählt wird.

6. Redox-Flow-Batterie gemäß einem der vorstehenden Ansprüche, wobei für die negative Halbzelle das Redox-Paar aus V³⁺/V²⁺, Np⁴⁺/Np³⁺, Sn⁴⁺/Sn²⁺, Sr²⁺/Sr, Ba²⁺Ba, Ce³⁺/Ce, Zn²⁺/Zn, As⁵⁺/As³⁺, U⁴⁺/U³⁺, Sb⁵⁺/Sb³⁺, S⁴⁺/S²⁺, Ti⁴⁺/Ti²⁺, In³⁺/In²⁺, Ni⁴⁺/Ni²⁺, S/S²⁻, Cr³⁺/Cr²⁺, In²⁺/In⁺, Ti³⁺/Ti²⁺, Eu³⁺/Eu²⁺, Pb²⁺/Pb, Tl⁺/Tl, Ti⁴⁺/Ti³⁺, Na⁺/Na, Li⁺/Li, K⁺/K, Mg⁺/Mg, Mg²⁺/Mg, Ca⁺/Ca, Ca²⁺/Ca, Sr⁺/Sr oder Be²⁺/Be ausgewählt wird.

7. Redox-Flow-Batterie gemäß einem der vorstehenden Ansprüche, wobei für die positive Halbzelle V⁴⁺/V⁵⁺ als Redox-Paar und für die negative Halbzelle V³⁺/V²⁺ als Redox-Paar verwendet wird.

8. Redox-Flow-Batterie gemäß Anspruch 7, wobei die Betriebstemperatur im Bereich von -30 °C bis 400 °C liegt.

9. Redox-Flow-Batterie gemäß Anspruch 7 oder 8, wobei die Konzentration der Vanadium-Ionen im Elektrolyten im Bereich von 0,1 mol/L bis 10 mol/L liegt.

10. Redox-Flow-Batterie gemäß einem der Ansprüche 1-4, wobei in zumindest einer Halbzelle, bevorzugter in beiden Halbzellen der Redox-Flow-Batterie das Redox-Paar von der ionischen Flüssigkeit gebildet wird.

11. Redox-Flow-Batterie gemäß einem der vorstehenden Ansprüche, wobei die Elektroden aus metallischen Elektroden, Diamant-Elektroden, oder Indium-Zinn-Oxid-Elektroden ausgewählt werden.

12. Redox-Flow-Batterie gemäß einem der vorstehenden Ansprüche, wobei der Elektrolyt keinen Zusatz von Stabilisierungsmitteln und/oder Säuren bzw. Basen enthält.

13. Verwendung eines Elektrolyten, der eine ionische Flüssigkeit enthält, in einer Redox-Flow-Batterie, wobei das Anion der ionischen Flüssigkeit(en) aus Halogenid, Phosphat, Nitrit, Nitrat, Sulfat, Hydrogensulfat, Carbonat, Hydrogencarbonat, Phosphonat, Phosphinat, Sulfonat, Carboxylat, Imid, Methid, oder deren Gemischen ausgewählt wird; und der Elektrolyt zu mindestens 90 Gew% aus der/den ionischen Flüssigkeit/en besteht.

## Claims

1. Redox flow battery comprising an electrolyte containing at least one ionic liquid, wherein the anion of the ionic liquid(s) is selected from among halide, phosphate, nitrite, nitrate, sulphate, hydrogensulphate, carbonate, hydrogencarbonate, phosphonate, phosphinate, sulphonate, carboxylate, imide, methide and mixtures thereof and the electrolyte consists to an extent of at least 90% by weight of the ionic liquid(s).

2. Redox flow battery according to Claim 1, wherein both half cells of the Redox flow battery contain an ionic liquid and the ionic liquids can be identical or different.

3. Redox flow battery according to either of the preceding claims, wherein the electrolyte contains less than 0.02% by weight of water and is preferably free of water.

4. Redox flow battery according to any of the preceding claims, wherein the cation of the ionic liquid(s) is selected from among imidazolium, pyridinium, pyrazolium, quinolinium, thiazolium, triazinium, pyrrolidinium, phosphonium, ammonium, sulphonium and mixtures thereof.

5. Redox flow battery according to any of the preceding claims, wherein the Redox pair for the positive half cell is selected from among V⁴⁺/V⁵⁺, F₂/F⁻, O₂/O²⁻, O_{3/}O₂, Ag²⁺/Ag⁺, Co³⁺/Co²⁺, N₂O/N₂, Ce⁴⁺/Ce³⁺, Au⁺/Au, Mn⁷⁺/Mn⁴⁺, Ni⁴⁺/Ni²⁺, Mn³⁺/Mn²⁺, Pb⁴⁺/Pb²⁺, Au³⁺/Au⁺, Cl₂/Cl⁻, Tl³⁺/Tl²⁺, Mn⁴⁺/Mn²⁺, Cu²⁺/Cu⁺, Pu⁵⁺/Pu⁴⁺, Br₂/Br⁻, I⁵⁺/I⁻, Fe³⁺/Fe²⁺, Pu⁴⁺/Pu³⁺, Hg²⁺/Hg₂²⁺, Hg²⁺/Hg, U⁵⁺/U⁴⁺, Ag²⁺/Ag⁺, V⁴⁺/V³⁺, Ru³⁺/Ru²⁺, Sn⁴⁺/Sn²⁺, Cl₂/Cl⁻ and I₂/I⁻.

6. Redox flow battery according to any of the preceding claims, wherein the Redox pair for the negative half cell is selected from among V³⁺/V²⁺, Np⁴⁺/Np³⁺, Sn⁴⁺/Sn²⁺, Sr²⁺/Sr, Ba²⁺/Ba, Ce³⁺/Ce, Zn²⁺/Zn, As⁵⁺/As³⁺, U⁴⁺/U³⁺, Sb⁵⁺/Sb³⁺, S⁴⁺/S²⁺, Ti⁴⁺/Ti²⁺, In³⁺/In²⁺, Ni⁴⁺/Ni²⁺, S/S²⁻, Cr³⁺/Cr²⁺, In²⁺/In⁺, Ti³⁺/Ti²⁺, Eu³⁺/Eu²⁺, Pb²⁺/Pb, Tl⁺/Tl, Ti⁴⁺/Ti³⁺, Na⁺/Na, Li⁺/Li, K⁺/K, Mg⁺/Mg, Mg²⁺/Mg, Ca⁺/Ca, Ca²⁺/Ca, Sr⁺/Sr and Be²⁺/Be.

7. Redox flow battery according to any of the preceding claims, wherein v⁴⁺/V⁵⁺ is used as Redox pair for the positive half cell and V³⁺/V²⁺ is used as Redox pair for the negative half cell.

8. Redox flow battery according to Claim 7, wherein the operating temperature is in the range from -30°C to 400°C.

9. Redox flow battery according to Claim 7 or 8, wherein the concentration of the vanadium ions in the electrolyte is in the range from 0.1 mol/l to 10 mol/l.

10. Redox flow battery according to any of Claims 1-4, wherein the Redox pair is formed by the ionic liquid in at least one half cell, more preferably in both half cells, of the Redox flow battery.

11. Redox flow battery according to any of the preceding claims, wherein the electrodes are selected from among metallic electrodes, diamond electrodes and indium-tin oxide electrodes.

12. Redox flow battery according to any of the preceding claims, wherein the electrolyte does not contain any addition of stabilizers and/or acids or bases.

13. Use of an electrolyte containing an ionic liquid, in a Redox flow battery, wherein the anion of the ionic liquid(s) is selected from among halide, phosphate, nitrite, nitrate, sulphate, hydrogensulphate, carbonate, hydrogencarbonate, phosphonate, phosphinate, sulphonate, carboxylate, imide, methide and mixtures thereof; and the electrolyte consists to an extent of at least 90% by weight of the ionic liquid(s).

## Revendications

1. Batterie à circulation redox, comprenant un électrolyte, qui contient au moins un liquide ionique, l'anion du ou des liquides ioniques étant choisi parmi halogénure, phosphate, nitrite, nitrate, sulfate, hydrogénosulfate, carbonate, hydrogénocarbonate, phosphonate, phosphinate, sulfonate, carboxylate, imide, méthide ou leurs mélanges, et l'électrolyte étant constitué à au moins 90 % en poids du ou des liquides ioniques.

2. Batterie à circulation redox selon la revendication 1, dans laquelle les deux demi-cellules de la batterie à circulation redox contiennent un liquide ionique et les liquides ioniques peuvent être identiques ou différents.

3. Batterie à circulation redox selon l'une quelconque des revendications précédentes, dans laquelle l'électrolyte contient moins de 0,02 % en poids d'eau, de préférence est anhydre.

4. Batterie à circulation redox selon l'une quelconque des revendications précédentes, dans laquelle le cation du ou des liquides ioniques est choisi parmi imidazolium, pyridinium, pyrazolium, quinolinium, thiazolium, triazinium, pyrrolidinium, phosphonium, ammonium, sulfonium ou leurs mélanges.

5. Batterie à circulation redox selon l'une quelconque des revendications précédentes, dans laquelle, pour la demi-cellule positive, la paire redox est choisie parmi V⁴⁺/V⁵⁺, F₂/F⁻, O₂/O²⁻, O_{3/}O₂, Ag²⁺/Ag⁺, Co³⁺/Co²⁺, N₂O/N₂, Ce⁴⁺/Ce³⁺, Au⁺/Au, Mn⁷⁺/Mn⁴⁺, Ni⁴⁺/Ni²⁺, Mn³⁺/Mn²⁺, Pb⁴⁺/Pb²⁺, Au³⁺/Au⁺, Cl_{2/}Cl⁻, Tl³⁺/Tl²⁺, Mn⁴⁺/Mn²⁺, Cu²⁺/Cu⁺, Pu⁵⁺/Pu⁴⁺, Br₂/Br⁻, I⁵⁺/I⁻, Fe³⁺/Fe²⁺, Pu⁴⁺/Pu³⁺, Hg²⁺/Hg₂²⁺, Hg²⁺/Hg, U⁵⁺/U⁴⁺, Ag²⁺/Ag⁺, V⁴⁺/V³⁺, Ru³⁺/Ru²⁺, Sn⁴⁺/Sn²⁺, Cl₂/Cl⁻ ou I₂/I⁻.

6. Batterie à circulation redox selon l'une quelconque des revendications précédentes, dans laquelle, pour la demi-cellule négative, la paire redox est choisie parmi V³⁺/V²⁺, Np⁴⁺/Np³⁺, Sn⁴⁺/Sn²⁺, Sr²⁺/Sr, Ba²⁺/Ba, Ce³⁺/Ce, Zn²⁺/Zn, As⁵⁺/As³⁺, U⁴⁺/U³⁺, Sb⁵⁺/Sb³⁺, S⁴⁺/S²⁺, Ti⁴⁺/Ti^{z+} In³⁺/In²⁺, Ni⁴⁺/Ni²⁺, S/S²⁻, Cr³⁺/Cr²⁺, In²⁺/In⁺, Ti³⁺/Ti²⁺, Eu³⁺/Eu²⁺, Pb²⁺/Pb, Tl⁺/Tl, Ti⁴⁺/Ti³⁺, Na⁺/Na, Li⁺/Li, K⁺/K, Mg⁺/Mg, Mg²⁺/Mg, Ca⁺/Ca, Ca²⁺/Ca, Sr⁺/Sr ou Be²⁺/Be.

7. Batterie à circulation redox selon l'une quelconque des revendications précédentes, dans laquelle V⁴⁺/V⁵⁺ est utilisée en tant que paire redox pour la demi-cellule positive et V³⁺/V²⁺ est utilisée en tant que paire redox pour la demi-cellule négative.

8. Batterie à circulation redox selon la revendication 7, dans laquelle la température d'exploitation se situe dans la plage allant de -30 °C à 400 °C.

9. Batterie à circulation redox selon la revendication 7 ou 8, dans laquelle la concentration des ions vanadium dans l'électrolyte se situe dans la plage allant de 0,1 mol/l à 10 mol/l.

10. Batterie à circulation redox selon l'une quelconque des revendications 1 à 4, dans laquelle la paire redox est formée par le liquide ionique dans au moins une demi-cellule, de préférence dans les deux demi-cellules, de la batterie à circulation redox.

11. Batterie à circulation redox selon l'une quelconque des revendications précédentes, dans laquelle les électrodes sont choisies parmi les électrodes métalliques, les électrodes en diamant ou les électrodes en oxyde d'indium-étain.

12. Batterie à circulation redox selon l'une quelconque des revendications précédentes, dans laquelle l'électrolyte ne contient pas d'ajout de stabilisateurs et/ou d'acides ou de bases.

13. Utilisation d'un électrolyte, qui contient un liquide ionique, dans une batterie à circulation redox, dans laquelle l'anion du ou des liquides ioniques est choisi parmi halogénure, phosphate, nitrite, nitrate, sulfate, hydrogénosulfate, carbonate, hydrogénocarbonate, phosphonate, phosphinate, sulfonate, carboxylate, imide, méthide ou leurs mélanges ; et l'électrolyte est constitué à au moins 90 % en poids du ou des liquides ioniques.
